# EUROPÄISCHE PATENTSCHRIFT

(11) **EP 1 584 842 B1**
(45) Veröffentlichungstag und Bekanntmachung des Hinweises auf die Patenterteilung: **08.11.2006**
(21) Anmeldenummer: 04008209.1
(22) Anmeldetag: 05.04.2004
(51) Int. Cl.: F16G 13/18, F16G 13/20

(54) **Drucksteife Antriebskette für eine Stellvorrichtung**
Stiff driving chain for an actuating mechanism
Chaîne de transmission rigide pour un dispositif actionneur

(43) Veröffentlichungstag der Anmeldung: 12.10.2005
(73) Patentinhaber: Schmezer, Alexander, 49124 Georgsmarienhütte (DE)
(72) Erfinder: Schmezer, Karl-Heinz, 49124 Georgsmarienhütte (DE)
(74) Vertreter: Busse & Busse Patentanwälte

(56) Entgegenhaltungen:
- EP-A- 1 382 882
- FR-A- 750 482
- PATENT ABSTRACTS OF JAPAN Bd. 1997, Nr. 09, 30. September 1997 (1997-09-30) -& JP 09 125845 A (ICHIKOH IND LTD; TOYO EXTERIOR CO LTD), 13. Mai 1997 (1997-05-13)

## Beschreibung

Die Erfindung betrifft eine drucksteife Antriebskette für eine Stellvorrichtung gemäß dem Oberbegriff des Anspruchs 1.

Eine gemäß DE 33 15 779 C2 bekannte Stellvorrichtung weist einen Antrieb mit einer drucksteifen Laschenkette auf, deren mit Außenlaschen versehene Kettenglieder durch jeweilige Gelenkbolzen und Riegelbolzen quer zur Kettenlängsrichtung verbunden sind. Mit einem zum Antrieb der Kette vorgesehenen Kettenrad wird jeweils an diesen Gelenkbolzen eine Vorschubkraft eingeleitet und danach können die zur Aussteifung der Kette vorgesehenen Riegelbolzen mittels einer quer zur Vorschubrichtung wirkenden Führungsvorrichtung in die jeweilige Riegelstellung verlagert werden. Auch bei der bei der gemäß DE 10 46 422 vorgesehenen Lösung werden quer zur Vorschubrichtung der Kette verlagerbare Riegelbolzen mittels einer Führungsvorrichtung bewegt, so daß die Kette eine drucksteife Gebrauchsstellung erst dann einnimmt, wenn diese Verlagerung der Riegelbolzen erfolgt ist.

Bei einer Blockkette gemäß DE 18 55 588 U wird eine Förderanlage zum horizontalen Fördern von Gütern vorgeschlagen, wobei die Zugkraft eines Antriebsrades zwar über jeweilige die Glieder der Kette verbindende Gelenkbolzen übertragen werden kann, das System insgesamt aber nicht für drucksteife Stellvorrichtungen vorgesehen ist. Gemäß DE 199 83 305 T1 ist ein Verbindungsteil vorgeschlagen, das eine innenliegende Kette aufweist, die zur Aussteifung mit einer ein kanalförmig langgestrecktes Längenstück bildenden Umhüllung versehen ist. Damit erfordern diese drucksteifen Antriebsketten einen nachteilig großen Einbauraum und sind durch eine Vielzahl von stark belasteten Gelenkteilen hohem Verschleiß ausgesetzt. In FR 750 482 A ist eine Zugkette mit parallel auf einem Querbolzen befindlichen Laschen gezeigt. Diese sind auch gemäß JP 9125845 A vorgesehen, wobei diese Kette mit einer Umlenkvorrichtung zusammenwirkt, in deren Bereich die Laschen geführt werden.

Gemäß EP 1 382 882 A2 ist eine Antriebskette gezeigt, bei der komplementäre Anlageflächen aufweisende Schwenkelemente für eine Stellkrafteinleitung im Bereich von bogenförmig aneinanderlegbaren Gleitflächen so ausgebildet sind, daß bei Anwendung dieser drucksteifen Kette in einer Hubvorrichtung eine Umlenkung im Bereich des Kettenrades möglich ist.

Die Erfindung befaßt sich mit dem Problem, eine drucksteife Antriebskette zu schaffen, deren bogenförmige Gleitflächen-Paarungen zur Bewegungsumlenkung aufweisende Schwenkelemente in einer weniger Einzelbauteile erfordernden Ketten-Struktur montierbar sind und diese durch geringe Reibung im Bereich der Bauteilverbindungen eine verschleißfreie, langzeitstabile sowie wartungsarme Anwendung ermöglicht.

Die Erfindung löst dieses Problem mit einer Antriebskette mit den Merkmalen des Anspruchs 1. Hinsichtlich wesentlicher weiterer Ausgestaltungen wird auf die Ansprüche 2 bis 8 verwiesen.

Die erfindungsgemäße Antriebskette weist im Bereich der beiden Schwenkelemente eine konkave Bogenkontur zur direkten Bildung von Gleitflächen-Paarungen mit dem zwischengeordneten Druckbolzen auf. Mit dieser Kombination der Schwenkelemente mit dem unmittelbar zwischen diese eingreifenden Druckbolzen ist eine direkte Krafteinleitung und -übertragung möglich, so daß die Kette insgesamt aus weniger Einzelteilen aufgebaut ist und eine einfache Baueinheit nach Art einer Schubkette für eine weitgehend beliebige Verwendung an Stell-, Hub- und Positioniergeräten erreicht ist.

Diese direkte Kraft- und Bewegungseinleitung wird mit einer verringerten Anzahl von bei der Stellbewegung belasteten Gleitflächen so gesteuert, daß in deren Bereich bei optimalen Stützbedingungen nur geringe Reibung auftritt. Damit ist das vereinfachte Schubketten-System im wesentlichen verschleiß- und wartungsfrei aufgebaut und mit hoher Langzeitstabilität einsetzbar. Diese Antriebskette kann insbesondere als eine Hochleistungskette für Stellvorrichtungen in automatischen Fertigungs- und Montagelinien verwendet werden, wobei Stellbewegungen mit mehr als 300 mm/s Vorschub und Richtungs- bzw. Belastungswechsel mit einer Hubanzahl mehr als 60 Hübe/min ausführbar sind.

Weitere Einzelheiten und vorteilhafte Ausgestaltungen der Erfindung ergeben sich aus der nachfolgenden Beschreibung und der Zeichnung, in der ein Ausführungsbeispiel der erfindungsgemäßen Antriebskette veranschaulicht ist. In der Zeichnung zeigen:
- Fig. 1: eine Seitenansicht der erfindungsgemäßen Antriebskette,
- Fig. 2: eine Vorderansicht der Antriebskette gemäß Fig. 1,
- Fig. 3: eine vergrößerte Seitenansicht eines Teilbereiches der drucksteifen Antriebskette in einer Arbeitsstellung,
- Fig. 4: eine Seitenansicht ähnlich Fig. 3 mit jeweiligen im Bereich der Druckbolzen vorgesehenen Gleitelementen,
- Fig. 5: eine Einzeldarstellung eines ersten Schwenkelementes für das die Antriebskette bildende Kettenglied,
- Fig. 6: eine Einzeldarstellung eines zweiten Schwenkelementes der Antriebskette,
- Fig. 7: eine Einzeldarstellung der zur Verbindung der Schwenkelemente im Bereich des Druckbolzens vorgesehenen Laschenteile,
- Fig. 8: eine Einzeldarstellung eines zwischen den Schwenkelementen vorgesehenen Distanzhalters,

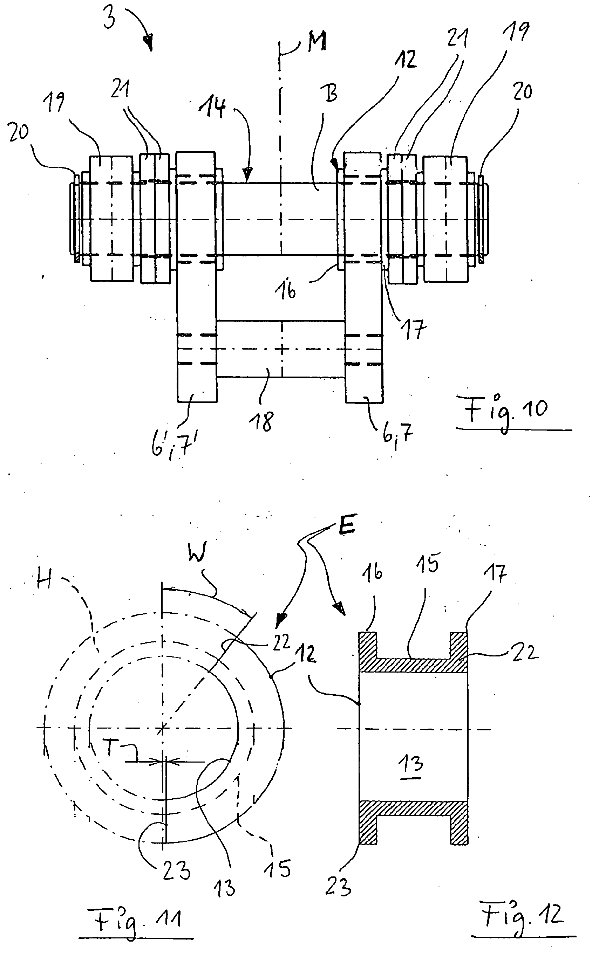

- Fig. 9: eine Einzeldarstellung des zwischen den Schwenkelementen vorgesehenen Druckbolzens,
- Fig. 10: eine Vorderansicht der Antriebskette gemäß Fig. 1,
- Fig. 11: eine Seitenansicht eines im Bereich der Bogenkontur vorgesehenen Gleitelementes in Form eines Hülsensegments, und
- Fig. 12: eine Seitenansicht des Hülsensegments gemäß Fig. 11.

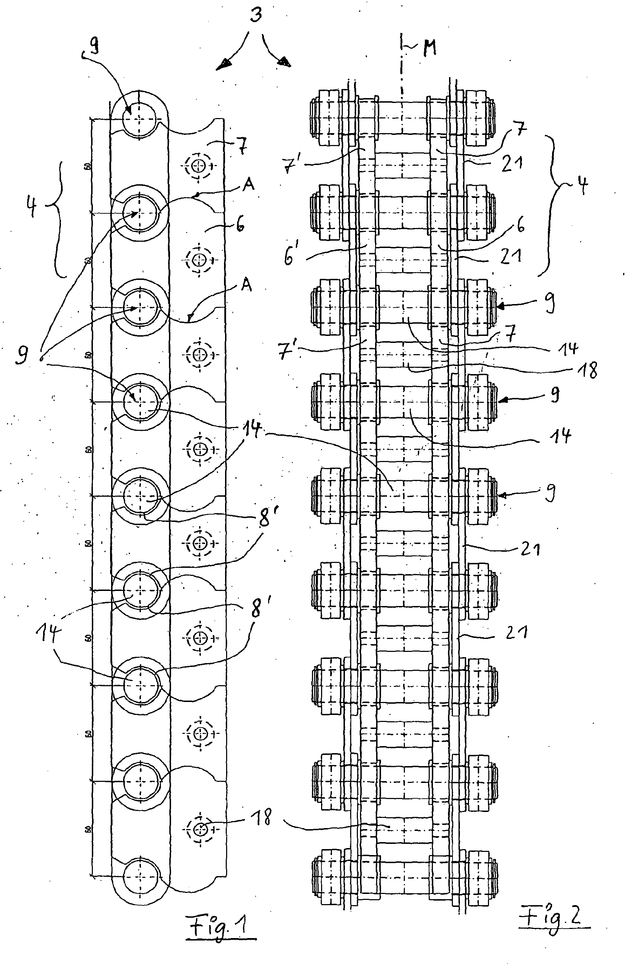

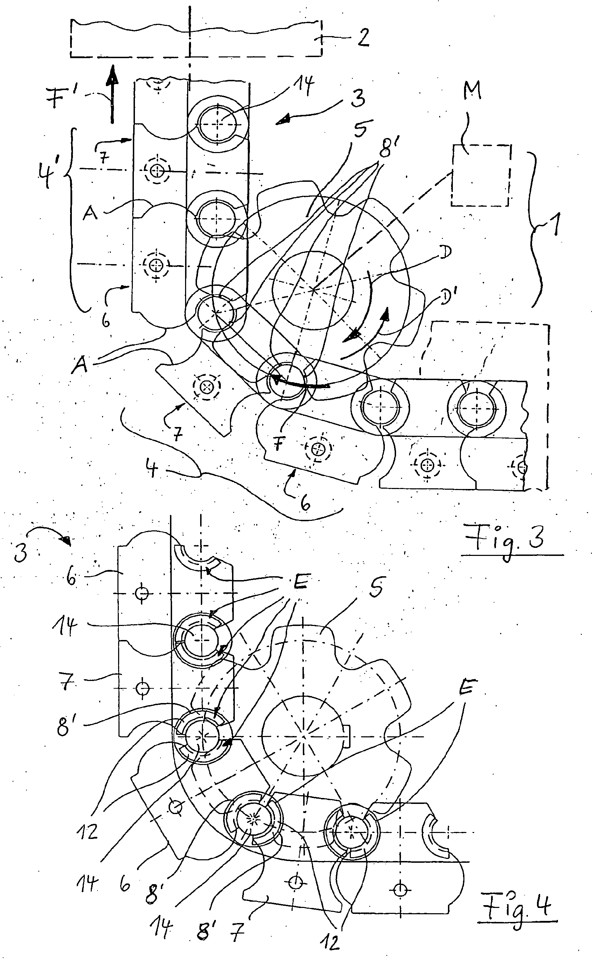

In Fig. 1 ist eine insgesamt mit 3 bezeichnete Antriebskette dargestellt, mit der eine in Fig. 3 allgemein mit 1 bezeichnete Stellvorrichtung in Form eines Hubtisches o. dgl. Arbeitsgerät durch eine stufenlose Verstellung verlagerbar ist. Die Antriebskette 3 weist dabei aneinandergereihte Kettenglieder 4 auf, die mittels eines durch einen Motor M angetriebenen Kettenrades 5 in eine drucksteife Hubstellung verlagerbar sind (Pfeil F', Kettenglieder 4').

Die Darstellung gemäß Fig. 2 zeigt, daß die Antriebskette 3 mehrere durch außenseitige Laschenteile 21 und quer zur Kettenlängsrichtung M im Bereich von Druckbolzen 14 als Antriebsglieder 9 verbundene Kettenglieder 4, 4' aufweist, die aus zumindest zwei Schwenkelementen 6 und 7 mit in Kettenlängsrichtung M zumindest bereichsweise komplementär geformten Anlageflächen A besteht. Diese Anlageflächen A weisen gemäß EP 1 382 882 A2 zumindest bereichsweise als Bogenkontur 8 verlaufende Gleitflächen G auf. Im Bereich dieser Gleitpaarungen ist eine Stellkraft F des Antriebsrades 5 (Drehrichtung bei Hub: D) auf die quer zur Kettenlängsrichtung M ausgerichteten Druckbolzen 14 einleitbar, so daß die in Fig. 3 mit 4' bezeichneten Kettenglieder mittels des Kettenrades 5 in die drucksteife Stellung verlagert werden und aus dieser Stellung durch Drehrichtungsumkehr (D') des Kettenrades 5 rückholbar sind.

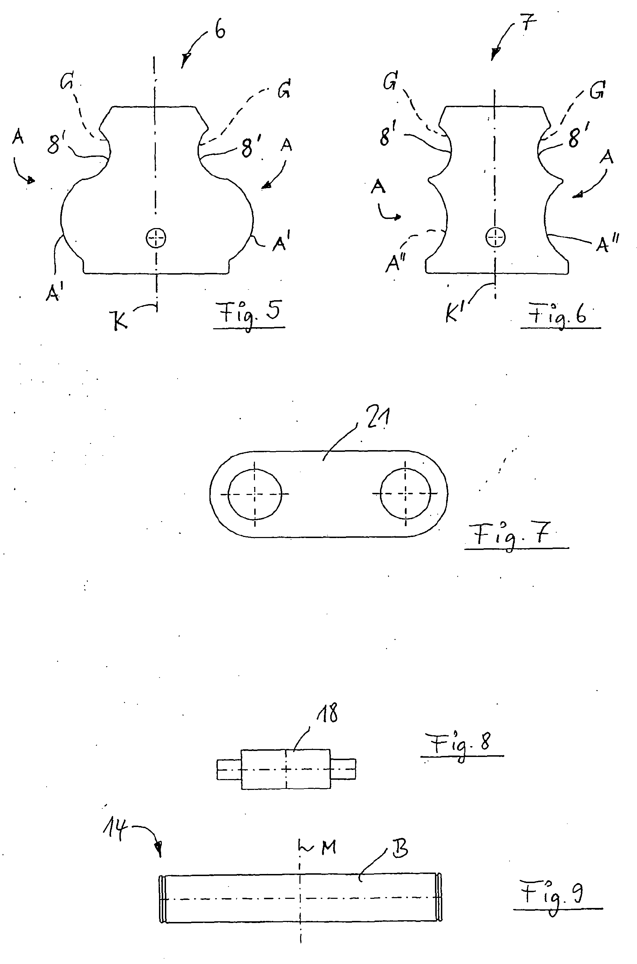

Bei der erfindungsgemäßen Ausführung der Antriebskette 3 weist der je Kettenglied 4, 4' vorgesehene Druckbolzen 14 eine Einbaulage auf, bei der dieser direkt zwischen die benachbarten Schwenkelemente 6 und 7 eingreift. Diese Eingriffslage ist dabei durch im Bereich von jeweils Teilflächen der beiden Anlageflächen A bildenden konkaven Bogenkonturen 8' definiert. Die Einzeldarstellungen gemäß Fig. 5 und 6 zeigen, daß das Schwenkelement 6 spiegelbildlich zur Mittellängsebene K mit jeweils einer aus der konkaven Bogenkontur 8' als Gleitfläche G und der konvexen Anlagefläche A' gebildete Kontur versehen ist. Das jeweils zugeordnete Schwenkelement 7 weist spiegelbildlich zur Mittellängsebene K' sowohl im Bereich der die Bogenkontur 8' bildenden Gleitfläche G als auch im Bereich der zugeordneten Anlagefläche A" jeweils konkave Konturbereiche auf, so daß sich die in Fig. 1 ersichtlichen Eingriffs- und Anlagebedingungen ergeben.

Bei funktionalem Einsatz dieser drucksteifen Antriebskette 3 gemäß Fig. 3 bzw. 4 wirkt der antreibende Druckbolzen 14 derart, daß sowohl in Vorschub- als auch Rückholrichtung die Umfangsfläche B des Druckbolzens 14 zumindest bereichsweise an einer der zwei in Kettenlängsrichtung M gegenüberliegenden konkaven Bogenkonturen 8' anliegt und in dieser Stellung jeweilige Gleitflächen-Paarungen definiert sind, in denen die Stellkraft F des antreibenden Kettenrades 5 innerhalb der Kette 3 umgelenkt wird.

Die Ansicht gemäß Fig. 2 zeigt, daß dem mittels jeweiliger endseitiger Laschenteile 21 verbundenen Druckbolzen 14 in Kettenlängsrichtung jeweils zwei parallele Reihen bildende Schwenkelemente-Paare 6, 6' bzw. 7, 7' zugeordnet sind, so daß das antreibende Kettenrad 5 zwischen diesen beiden Reihen von Schwenkelementen an zumindest einen der Druckbolzen anlegbar ist. Ebenso ist denkbar, nur eine Reihe von Schwenkelementen 6, 7 vorzusehen, die vom Druckbolzen 14 so durchgriffen ist, daß an diesem außenseitig die Krafteinleitung anliegt (nicht dargestellt).

Damit ist eine Antriebskette 3 geschaffen, die in vorteilhafter Konstruktion mit Gleichteilen jeweilige aus wenigen Einzelteilen bestehende Kettenglieder 4 aufweist. Die zur Kraftaufnahme und Umlenkung des Antriebsmomentes vorgesehenen Schwenkelemente 6, 7 sind dabei im Bereich der konkaven Bogenkontur 8' mit einer den Druckbolzen 14 im wesentlichen verschleiß- und reibungsfrei abstützenden Aufnahme versehen. Denkbar ist dabei, daß der umfangsseitig feinbearbeitete Druckbolzen 14 auf einer im Bereich der Bogenkontur 8' vorgesehenen gehärteten Oberfläche so gehalten ist, daß die direkt in der Bogenkontur 8' flächig eingeleiteten Druckkräfte F mit geringer Reibung umgelenkt werden.

Die Darstellung gemäß Fig. 4 zeigt, daß im Bereich der Gleitflächen-Paarungen jeweilige an den Verlauf der Bogenkontur 8' angepaßte Gleitelemente E zwischen Druckbolzen 14 und Schwenkelement 6, 7 vorgesehen sind.

In zweckmäßiger Ausführung sind als Gleitelemente E jeweilige Hülsensegmente 12 vorgesehen (Fig. 11, Fig. 12). Diese als jeweilige Teilabschnitte eines mit Strich-Punkt-Linien dargestellten Hülsenteils H (Fig. 11) ausgebildeten Hülsensegmente 12 weisen einerseits einen inneren kreisbogenförmigen Mantelteil 13 auf, der unmittelbar auf dem Druckbolzen 14 auflegbar ist. Andererseits sind die Hülsensegmente 12 mit einem außenseitigen U-Profil versehen, dessen an der konkaven Bogenkontur 8' des jeweiligen Schwenkelementes 6, 7 anlegbarer Basisbogen 15 von seitlich an den Schwenkelementen 6, 7 anlegbaren Schenkelteilen 16, 17 begrenzt ist. Zur optimalen Lagerung der Hülsensegmente 12 in der Umlenkphase (Fig. 3, Fig. 4) sind diese mit einer einen Schrägungswinkel W aufweisenden inneren Stirnfläche 22 und einer eine Exzentrizität T aufweisenden äußeren Stirnfläche 23 versehen.

In Fig. 10 ist die Antriebskette 3 in einer Stirnansicht veranschaulicht, die die Aneinanderreihung der einzelnen Bauteile auf dem Druckbolzen 14 verdeutlicht. In zweckmäßiger Ausführung ist zur Stabilisierung der Antriebskette 3 zwischen den paarweise gegenüberliegend angeordneten Schwenkelementen 6, 6'; 7, 7' jeweils ein quer zur Kettenlängsrichtung M verlaufender Distanzhalter 18 (Fig. 8) vorgesehen. Für die Abstützung der Antriebskette 3 in der nicht näher dargestellten Stellvorrichtung 1 sind auf den Druckbolzen 14 außenseitig neben den Laschenteilen 21 (Fig. 7) jeweilige in Form von Kugellagern o. dgl. vorgesehene Stützteile 19 abgestützt, die ihrerseits durch einen äußeren Spannring o. dgl. 20 in der Einbaulage gesichert sind.

## Patentansprüche

1. Drucksteife Antriebskette für eine Stellvorrichtung (1), mit mehreren durch Laschenteile (21) gelenkig verbundenen Kettengliedern (4; 4'), die aus zumindest zwei Schwenkelementen (6, 6'; 7, 7') mit in Kettenlängsrichtung (M) zumindest bereichsweise komplementär geformten Anlageflächen (A) besteht und diese bereichsweise als Bogenkontur verlaufende Gleitflächen (G) aufweisen, derart, daß eine Stellkraft (F) eines quer zur Kettenlängsrichtung (M) ausgerichteten und als Druckbolzen (14) ausgebildeten Antriebsgliedes (9) in die drucksteife Kette (3) einleitbar ist und dabei die Kettenglieder (4, 4') mittels eines Kettenrades (5) in eine drucksteife Stellung verlagerbar (Pfeil F') bzw. aus dieser rückholbar sind, **dadurch gekennzeichnet, daß** der Druckbolzen (14) im Bereich von jeweils Teilflächen der beiden Anlageflächen (A) bildenden konkaven Bogenkonturen (8') zwischen die benachbarten Schwenkelemente (6, 7; 6', 7') eingreift.

2. Drucksteife Antriebskette nach Anspruch 1, **dadurch gekennzeichnet, daß** der Druckbolzen (14) sowohl in Vorschub- als auch Rückholrichtung (D; D') mit seiner zumindest bereichsweise an einer der zwei gegenüberliegenden konkaven Bogenkonturen (8') anliegenden Umfangsfläche (B) eine jeweilige Gleitflächen-Paarung definiert und in dieser die Stellkraft (F) des antreibenden Kettenrades (5) innerhalb der Kette (3) umlenkbar ist.

3. Drucksteife Antriebskette nach Anspruch 1 oder 2, **dadurch gekennzeichnet, daß** den mittels jeweiliger Laschenteile (21) endseitig verbundenen Druckbolzen (14) jeweils zwei parallele Reihen in Kettenlängsrichtung (M) bildende Schwenkelement-Paare (6, 6'; 7, 7') zugeordnet sind, derart, daß quer zur Kettenlängsrichtung (M) zwischen den beiden Reihen von Schwenkelementen (6, 6'; 7, 7') das antreibende Kettenrad (5) an zumindest einen der Druckbolzen (14) anlegbar ist.

4. Drucksteife Antriebskette nach einem der Ansprüche 1 bis 3, **dadurch gekennzeichnet, daß** die Schwenkelemente (6, 7) im Bereich der konkaven Bogenkontur (8') eine im wesentlichen verschleiß- und reibungsfreie Abstützung für den Druckbolzen (14) bilden.

5. Drucksteife Antriebskette nach einem der Ansprüche 1 bis 4, **dadurch gekennzeichnet, daß** im Bereich der Gleitflächen-Paarungen jeweilige an den Verlauf der Bogenkontur (8') angepaßte Gleitelement (E) zwischen Druckbolzen (14) und Schwenkelement (6, 7; 6', 7') vorgesehen sind.

6. Drucksteife Antriebskette nach Anspruch 5, **dadurch gekennzeichnet, daß** als Gleitelemente (E) jeweilige Hülsensegmente (12) vorgesehen sind, die einerseits mit einer inneren kreisbogenförmigen Mantelfläche (13) auf dem Druckbolzen (14) auflegbar sind und andererseits ein außenseitiges U-Profil mit an der Bogenkontur (8') des Schwenkelementes (6, 7) anlegbarem Basisbogen (15) und seitlich am Schwenkelement (6, 7) anlegbaren Schenkelteilen (16, 17) aufweisen.

7. Drucksteife Antriebskette nach einem der Ansprüche 1 bis 6, **dadurch gekennzeichnet, daß** die in Kettenlängsrichtung (M) aneinanderlegbaren Anlageflächen (A) der benachbarten Schwenkelemente (6, 7; 6', 7') jeweils gleichebenig an die konkave Bogenkontur (8') anschließende und komplementär geformte Teilbereiche (A', A") aufweisen, die in drucksteifer Stellung (4') der Kette (3) als formschlüssiges Schließprofil aneinanderlegbar sind.

8. Drucksteife Antriebskette nach einem der Ansprüche 1 bis 7, **dadurch gekennzeichnet, daß** die Schwenkelemente (6, 6'; 7, 7') quer zur Kettenlängsrichtung (M) durch jeweilige Distanzhalter (18) verbunden sind.

## Claims

1. Driving chain which is stiff in compression for an actuating mechanism (1), having a plurality of chain links (4, 4') which are connected in such a way as to hinge by side-plate parts (21) and which comprise at least two pivoting elements (6, 7; 6', 7') having contacting faces (A) which, in the longitudinal direction (M) of the chain, are of complementary shapes at least in a region or regions, and the said contacting faces (A) have sliding surfaces (G) which extend in the form of an arcuate contour in a region or regions, in such a way that an actuating force (F), from a driving member (9) which is oriented transversely to the longitudinal direction (M) of the chain and which is in the form of a pressure-applying pin (14), can be applied to the chain (3) which is stiff in compression, and the chain links (4, 4') can, in this case, be moved (arrow F') to a position in which they are stiff in compression, or can be returned therefrom, by means of a sprocket (5), **characterised in that** the pressure-applying pin (14) engages between the adjoining pivoting elements (6, 7; 6' 7') in the region of concave arcuate contours (8') which respectively form parts of the two contacting faces (A).

2. Driving chain which is stiff in compression according to claim 1, **characterised in that**, in both the advancing and return directions (D, D'), the pressure-applying pin (14) defines, by its circumferential face (B) which, at least in a region or regions, bears against one of the two concave arcuate contours (8') situated opposite, a respective pairing of sliding faces, and at this pairing the actuating force (F) from the driving sprocket (5) can have its direction changed within the chain (3).

3. Driving chain which is stiff in compression according to claim 1 or 2, **characterised in that** the pressure-applying pins (14), which are connected at the ends by respective side-plate parts (21), each have associated with them pivoting elements (6, 7; 6'. 7') which form two parallel rows in the longitudinal direction (M) of the chain, in such a way that the driving sprocket (5) can be applied to at least one of the pressure-applying pins (14), transversely to the longitudinal direction (M) of the, chain, between the two rows of pivoting elements (6, 7; 6', 7').

4. Driving chain which is stiff in compression according to one of claims 1 to 3, **characterised in that**, in the region of the concave arcuate contour (8'), the pivoting elements (6, 7) form a support for the pressure-applying pin (14) which is substantially free of wear and friction.

5. Driving chain which is stiff in compression according to one of claims 1 to 4, **characterised in that** respective sliding elements (E) which are matched to the shape of the arcuate contour (8') are provided between the pressure-applying pin (14) and the pivoting elements (6, 7; 6', 7') in the region of the pairings of sliding faces.

6. Driving chain which is stiff in compression according to claim 5, **characterised in that** what are provided as sliding elements (E) are respective sectors of sleeves (12) which on the one hand can be applied to the pressure-applying pin (14) by an inner circumferential face (13) in the form of an arc of a circle and on the other hand have an external U-profile having a arc (15) forming the bottom of the U which can be applied to the arcuate contour (8') of the pivoting element (6, 7) and having parts (16, 17) forming the sides of the U which can be applied laterally to the pivoting element (6,7).

7. Driving chain which is stiff in compression according to one of claims 1 to 6, **characterised in that** the contacting faces (A) of the adjoining pivoting elements (6, 7; 6', 7'), which contacting faces (A) can be brought to bear against one another in the longitudinal direction (M) of the chain, each have sub-regions (A', A") which are of complementary shapes and follow on from the concave arcuate contour (8') in the same plane and which can be brought to bear against one another when the chain (3) is in the position (4') in which it is stiff in compression to form a positively interengaged locking profile.

8. Driving chain which is stiff in compression according to one of claims 1 to 7, **characterised in that** the pivoting elements (6, 7; 6', 7') are connected, transversely to the longitudinal direction (M) of the chain, by respective spacers (18).

## Revendications

1. Chaîne de transmission rigide pour un dispositif actionneur (1), avec plusieurs chaînons (4; 4') articulés l'un à l'autre au moyen d'éclisses (21), qui se composent d'au moins deux éléments pivotants (6, 6'; 7, 7') avec des faces d'appui (A) de forme au moins localement complémentaire dans la direction longitudinale de la chaîne (M) et celles-ci présentant des faces de glissement (G) ayant un contour localement en forme d'arc, de telle manière qu'une force d'actionnement (F) d'un élément d'entraînement (9) orienté transversalement à la direction longitudinale de la chaîne (M) et réalisé sous la forme d'un boulon de pression (14) puisse être introduite dans la chaîne rigide (3) et qu'en l'occurrence les chaînons (4, 4') puissent être déplacés dans une position rigide (F') ou être retirés de celle-ci au moyen d'une roue à chaîne (5), **caractérisée en ce que** le boulon de pression (14) engrène dans la région de contours concaves en arc (8') formant chaque fois des faces partielles des deux faces d'appui (A), entre les éléments pivotants voisins (6, 7; 6', 7').

2. Chaîne de transmission rigide selon la revendication 1, **caractérisée en ce que** le boulon de pression (14) définit, aussi bien en direction d'avancement qu'en direction de retrait (D; D'), avec sa surface latérale (B) appliquée au moins localement sur un des deux contours concaves en arc opposés (8'), une paire respective de faces de glissement et dans celle-ci la force d'actionnement (F) de la roue à chaîne motrice (5) peut être déviée à l'intérieur de la chaîne (3).

3. Chaîne de transmission rigide selon la revendication 1 ou 2, **caractérisée en ce qu'**aux boulons de pression (14) assemblés côté extrémité au moyen d'éclisses respectives (21) sont chaque fois associées deux paires d'éléments pivotants (6, 6'; 7, 7') formant deux rangées parallèles dans la direction longitudinale de la chaîne (M), de telle manière que la roue à chaîne motrice (5) puisse être appliquée à au moins un des boulons de pression (14) entre les deux rangées d'éléments pivotants (6, 6'; 7, 7'), transversalement à la direction longitudinale de la chaîne (M).

4. Chaîne de transmission rigide selon l'une quelconque des revendications 1 à 3, **caractérisée en ce que** les éléments pivotants (6, 7) forment dans la région du contour concave en arc (8') un appui sensiblement sans usure et sans frottement pour le boulon de pression (14).

5. Chaîne de transmission rigide selon l'une quelconque des revendications 1 à 4, **caractérisée en ce qu'**il est prévu, dans la région des paires de faces de glissement, chaque fois des éléments glissants (E) adaptés au tracé du contour en arc (8') entre le boulon de pression (14) et l'élément pivotant (6, 7; 6', 7').

6. Chaîne de transmission rigide selon la revendication 5, **caractérisée en ce qu'**il est prévu comme éléments glissants (E) chaque fois des segments de douille (12), qui d'une part peuvent être appliqués par une surface latérale intérieure en arc de cercle (13) sur le boulon de pression (14) et d'autre part présentent un profil en U extérieur avec un arc de base (15) applicable sur le contour en arc (8') de l'élément pivotant (6, 7) et des parties de branche (16, 17) applicables latéralement sur l'élément pivotant (6, 7).

7. Chaîne de transmission rigide selon l'une quelconque des revendications 1 à 6, **caractérisée en ce que** les faces d'appui (A) applicables l'une sur l'autre dans la direction longitudinale de la chaîne (M) des éléments pivotants voisins (6, 7; 6', 7') présentent chaque fois dans le même plan des régions partielles (A', A") se raccordant au contour concave en arc (8') et de forme complémentaire qui, dans la position rigide (4') de la chaîne (3), sont applicables l'une sur l'autre en un profil de fermeture à emboîtement.

8. Chaîne de transmission rigide selon l'une quelconque des revendications 1 à 7, **caractérisée en ce que** les éléments pivotants (6, 6'; 7, 7') sont assemblés par des écarteurs respectifs (18) transversalement à la direction longitudinale de la chaîne (M).
